# DEMANDE DE BREVET EUROPEEN

(11) **EP 2 423 811 A1**
(43) Date de publication de la demande: **29.02.2012**
(21) Numéro de dépôt: 11175613.6
(22) Date de dépôt: 27.07.2011
(51) Int. Cl.: G06F 9/44, H04N 7/24

(54) **Procédé et dispositif de test non perturbatif de fonctionnement d'une application de fourniture d'informations accessibles à certaines dates**

(30) Priorité: 27.08.2010 FR 1056797
(71) Demandeur: Alcatel Lucent, 75007 Paris (FR)
(72) Inventeur: Trefcon, Michel, 35000 RENNES (FR); Phan, CaoThanh, 35000 RENNES (FR)
(74) Mandataire: Croonenbroek, Thomas Jakob

(57) **Abrégé**

Un dispositif (D) est dédié au test du fonctionnement d'une application de fourniture d'informations accessibles à des dates définies par rapport à une horloge de référence (HR) offrant une date de référence. Ce dispositif (D) comprend i) des moyens d'interrogation (MI) propres à ordonner à un terminal de communication (T) de transmettre à cette application (AS) une requête pour obtenir des informations accessibles à une date donnée et à laquelle ils ont adjoint dans un champ choisi des informations temporelles représentatives d'une date de substitution, et ii) des moyens d'extraction (ME) agencés pour extraire d'une requête reçue par l'application (AS) les informations temporelles qui sont contenues dans son champ choisi, puis pour contraindre l'application (AS) à utiliser momentanément la date de substitution qu'elles représentent en remplacement de la date de référence pour cette seule requête, afin que cette application (AS) intègre dans un message de réponse les informations requises qui sont accessibles à la date donnée définie par rapport à cette date de substitution.

## Description

L'invention concerne les applications qui sont dédiées à la fourniture d'informations accessibles par des usagers finaux à certaines dates, et plus précisément le test du fonctionnement de telles applications.

On entend ici par "usager final" une personne disposant d'un terminal de communication pouvant se connecter à au moins un réseau de communication afin d'utiliser certaines au moins des fonctionnalités offertes par au moins une application tournant dans un serveur.

Par ailleurs, on entend ici par "date" un jour et un horaire.

Comme le sait l'homme de l'art, certaines applications ont besoin d'une date de référence afin de pouvoir mettre des informations à la disposition d'usagers finaux clients, via un réseau de communication (éventuellement via l'Internet (ou "web")), et à certaines dates prédéfinies. C'est notamment, et non limitativement, le cas des applications qui sont destinées à fournir des informations décrivant des contenus avant, pendant et éventuellement après les dates de diffusion de ces contenus. Il est rappelé que ces dernières applications sont notamment utilisées pour la diffusion de type "point-à-point" (ou "unicast"), sur requête, de contenus et d'informations relatives à ces contenus, par exemple dans le cadre de services de télévision numérique (ou "MiTV").

On entend ici par "contenu" un ensemble de données destinées à être affichées sur un écran et/ou diffusées par des haut-parleurs (ou équivalents) et/ou utilisées par une application d'un terminal de communication d'un usager final, comme par exemple des programmes de télévision ou de radio, des fichiers de données (ou "data" en anglais), des fichiers de texte, des articles, des images, des vidéos, ou des messages prédéfinis diffusés à l'arrivée de moyens de transport et liés à une date d'arrivée.

Lorsqu'un usager final souhaite accéder à des informations, décrivant par exemple des programmes de télévision qui sont en cours de diffusion ou qui vont être prochainement diffusés, il doit adresser à l'application distante, qui contrôle la fourniture de ces informations et qui tourne par exemple dans un serveur de contenus, une requête désignant les informations requises. A réception d'une telle requête, l'application accède à une base de données dans laquelle sont stockées les informations (de contenus) requises en correspondance de dates de diffusion, afin de déterminer celles dont les dates de diffusion incluent ou précèdent une date de référence en cours d'une horloge de référence (par exemple celle du serveur de contenus).

Certaines personnes autorisées, comme par exemple des administrateurs système, ont fréquemment besoin de tester le fonctionnement d'une application du type précité. Cela est notamment utile pour vérifier si elles sont effectivement en mesure de fournir des informations qui correspondent à la date de référence en cours. Cela est également utile pour tenter de comprendre l'origine d'un dysfonctionnement d'application qui a eu lieu dans le passé (proche) ou bien pour faire fonctionner une application de façon anticipée, par exemple afin de vérifier qu'une programmation sera présentée comme souhaité.

Dans ces situations, l'administrateur système transmet à l'application distante, au moyen de son terminal de communication, une requête qui désigne des informations associées à une date donnée, par exemple largement antérieure à la date de référence en cours, et en retour l'application transmet à ce terminal de communication requérant un message de réponse qui contient les informations requises accessibles à la date donnée définie par rapport à l'horloge de référence.

L'inconvénient majeur de ce mode de fonctionnement réside dans le fait que pour permettre à l'administrateur système d'accéder aux informations qui étaient (ou seront) accessibles à la date donnée dans une requête, l'application est obligée de changer momentanément la date de référence du serveur. Plus précisément, elle doit remplacer la date de référence en cours par la date donnée, afin, en quelque sorte, de leurrer le serveur qui stocke les informations en correspondance de leurs dates d'accessibilité réelles. Or, si un utilisateur final transmet une requête d'accès à des informations pendant cette phase de test, l'application est contrainte d'utiliser comme date de référence celle qui remplace momentanément la véritable date de référence, c'est-à-dire la date donnée contenue dans la requête de l'administrateur système. L'utilisateur final va donc recevoir des informations qui n'ont a priori rien à voir avec les contenus en cours de diffusion ou qui seront très prochainement diffusés ou périmés. Par ailleurs, tant que l'administrateur système n'a pas découvert l'origine d'un dysfonctionnement, il doit effectuer de nouveaux tests avec à chaque fois une nouvelle date donnée, ce qui peut imposer pendant des durées relativement longues l'utilisation de dates de référence différentes de la date de référence réelle (en cours).

L'invention a donc pour but d'améliorer la situation.

Elle propose notamment à cet effet un procédé, destiné à tester le fonctionnement d'une application dédiée à la fourniture d'informations accessibles à des dates qui sont définies par rapport à une horloge de référence offrant une date de référence, et comportant une étape a) dans laquelle un terminal de communication transmet à cette application une requête pour obtenir des informations accessibles à une date donnée, et une étape b) dans laquelle l'application transmet au terminal de communication requérant un message de réponse contenant les informations requises accessibles à la date donnée définie par rapport à l'horloge de référence.

Ce procédé se caractérise par le fait qu'à l'étape a) le terminal de communication adjoint à un champ choisi de la requête des informations temporelles qui sont représentatives d'une date de substitution devant être utilisée momentanément par l'application en remplacement de la date de référence pour cette seule requête considérée, et qu'à l'étape b) l'application intègre dans son message de réponse les informations requises qui sont accessibles à la date donnée définie par rapport à la date de substitution contenue dans la requête reçue.

Le procédé selon l'invention peut comporter d'autres caractéristiques qui peuvent être prises séparément ou en combinaison, et notamment :
- à l'étape a) le terminal de communication peut adjoindre les informations temporelles dans un champ additionnel dédié de la requête;
- l'application peut être dédiée à la fourniture d'informations qui décrivent des contenus et stockées dans un serveur de contenus, disposant de l'horloge de référence qui offre la date de référence, et qui sont accessibles pendant et avant les dates de diffusion des contenus.

L'invention propose également un dispositif, dédié au test de fonctionnement d'une application de fourniture d'informations accessibles à des dates qui sont définies par rapport à une horloge de référence offrant une date de référence, et comportant des moyens d'interrogation propres à ordonner à un terminal de communication de transmettre à cette application une requête pour obtenir des informations accessibles à une date donnée.

Ce dispositif se caractérise par le fait, d'une part, que ces moyens d'interrogation sont agencés pour adjoindre à un champ choisi d'une requête des informations temporelles qui sont représentatives d'une date de substitution, et, d'autre part, qu'il comprend également des moyens d'extraction agencés pour extraire d'une requête reçue par l'application les informations temporelles qui sont contenues dans son champ choisi puis pour contraindre cette application à utiliser momentanément la date de substitution qu'elles représentent en remplacement de la date de référence pour cette seule requête considérée, afin qu'elle intègre dans le message de réponse les informations requises qui sont accessibles à la date donnée définie par rapport à cette date de substitution.

Le dispositif selon l'invention peut comporter d'autres caractéristiques qui peuvent être prises séparément ou en combinaison, et notamment :
- ses moyens d'interrogation peuvent être agencés pour adjoindre les informations temporelles dans un champ additionnel dédié de la requête;
- il peut être agencé pour fonctionner avec une application dédiée à la fourniture d'informations qui décrivent des contenus et stockées dans un serveur de contenus qui dispose de l'horloge de référence offrant la date de référence, et qui sont accessibles pendant et avant les dates de diffusion des contenus.

L'invention propose également un terminal de communication comprenant des moyens d'interrogation d'un dispositif de test de fonctionnement du type de celui présenté ci-avant.

L'invention propose également un serveur de contenus, propre à stocker au moins des informations décrivant des contenus, disposant d'une horloge de référence offrant une date de référence, et comprenant des moyens d'extraction d'un dispositif de test de fonctionnement du type de celui présenté ci-avant.

L'invention est particulièrement bien adaptée, bien que de façon non exclusive, aux requêtes et messages de réponse de type HTTP qui concernent des applications Internet (ou web).

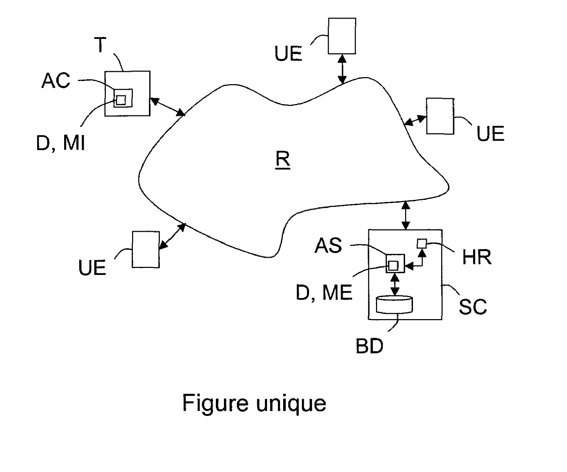

D'autres caractéristiques et avantages de l'invention apparaîtront à l'examen de la description détaillée ci-après, et du dessin annexé, sur lequel l'unique figure illustre de façon très schématique un réseau de communication auquel sont connectés des terminaux de communication d'usagers finaux, un terminal de communication d'un administrateur système, équipé de moyens d'interrogation d'un dispositif de test de fonctionnement selon l'invention, et un serveur de contenus, équipé de moyens d'extraction de ce même dispositif de test de fonctionnement.

Le dessin annexé pourra non seulement servir à compléter l'invention, mais aussi contribuer à sa définition, le cas échéant.

L'invention a pour objet de permettre le test du fonctionnement d'au moins une application AS dédiée à la fourniture d'informations à des terminaux de communication UE d'usagers finaux à des dates prédéfinies.

On notera que les terminaux de communication UE des usagers finaux peuvent être de n'importe quel type (filaire ou non filaire) dès lors qu'ils sont capables de se connecter à un réseau de communication R (filaire ou non filaire) afin d'échanger des données au moyen de requêtes ou messages avec d'autres terminaux de communication ou des équipements de réseau.

Dans ce qui suit, on considère à titre d'exemple non limitatif que l'application AS est dédiée à la fourniture d'informations qui décrivent des contenus devant être prochainement diffusés, ou en cours de diffusion. Mais, l'invention n'est pas limitée à ce type d'application. Elle concerne en effet tout type d'application destinée au moins à fournir des informations à des dates prédéfinies.

Par ailleurs, et comme illustré non limitativement, on considère dans ce qui suit, à titre d'exemple non limitatif, que l'application AS est de type serveur et donc fait partie d'un serveur (ici de contenus) SC qui est raccordé à, ou accessible via, un réseau de communication R. Mais, l'invention n'est pas limitée à ce type d'implantation. En effet, l'application AS pourrait être implantée dans un autre équipement que celui qui stocke (et ici diffuse) les contenus et les informations associées qui les décrivent.

On notera que le serveur SC comprend une horloge interne HR, dite horloge de référence, qui fournit une date de référence utilisée par l'application AS.

De plus, on considère dans ce qui suit, à titre d'exemple non limitatif, que l'application AS est de type Internet (ou web), c'est-à-dire qu'elle peut échanger des requêtes et des messages de réponse avec des terminaux de communication T et UE distants, via l'Internet et donc via au moins un réseau de communication R connecté à l'Internet. Mais, l'invention n'est pas limitée à ce type d'application.

On notera que le terminal de communication référencé T sur l'unique figure appartient à un administrateur système, ou équivalent, qui est autorisé à faire fonctionner l'application AS, notamment afin de tester son fonctionnement dans le but de détecter et/ou de résoudre d'éventuels dysfonctionnements. Un tel terminal (de communication) T peut être, par exemple, un ordinateur fixe ou portable.

En outre, on considère dans ce qui suit, à titre d'exemple non limitatif, que le réseau de communication R est de type filaire et adapté à la diffusion sur requête de contenus et d'informations relatives à ces contenus au moins en mode "point-à-point" (ou "unicast"). II pourra donc s'agir, par exemple, d'un réseau de type xDSL. Mais, l'invention n'est pas limitée à ce type de réseau de communication. Elle concerne en effet tout type de réseau de communication, filaire ou non filaire, capable de transmettre sur requête des contenus et des informations relatives à ces contenus.

Enfin, on considère dans ce qui suit, à titre d'exemple non limitatif, que les requêtes et messages de réponse sont échangés dans le cadre d'un service de télévision numérique (ou MiTV). Mais, l'invention n'est pas limitée à ce type de service de diffusion.

Afin de permettre à une personne autorisée (ici un administrateur système) de tester le fonctionnement de l'application AS, l'invention propose de mettre en oeuvre au sein du réseau (de communication) R un procédé de test de fonctionnement.

Ce dernier comprend deux étapes (a) et (b).

L'étape (a) consiste à générer dans le terminal (de communication) T d'une personne autorisée (ici un administrateur système) une requête pour obtenir des informations qui sont, seront, ou ont été, accessibles à une date donnée (fournie), en adjoignant à cette requête, dans un champ choisi, des informations temporelles représentatives d'une date de substitution, puis à transmettre cette requête à l'application AS. Cette date de substitution est destinée à être utilisée momentanément par l'application AS pour cette seule requête considérée, en remplacement de la date de référence qui est ici fournie par l'horloge de référence HR du serveur SC et qu'elle utilise habituellement pour répondre aux requêtes des usagers finaux (UE).

De préférence, le champ de la requête qui est choisi pour recevoir les informations temporelles représentatives d'une date de substitution est un champ additionnel dédié. Mais, dans une variante on pourrait utiliser une partie au moins d'un autre champ de requête, qui n'est pas totalement utilisé.

On notera que le format des informations temporelles adjointes dépend de la précision souhaitée et/ou du type de la requête.

Par exemple, lorsque l'application AS est de type Internet (ou web), il est avantageux que les requêtes et les messages de réponse soient de type HTTP, et donc se présentent sous la forme de messages textuels. Mais, l'invention n'est pas limitée au seul protocole HTTP. En effet, d'autres types de protocole d'échange de données peuvent être utilisés. Dans le cas de requêtes HTTP, les informations temporelles se présentent sous la forme d'une date en format texte (alphanumérique).

Cette étape (a) peut être initiée par un dispositif de test de fonctionnement D, et plus précisément par des moyens d'interrogation MI que comprend ce dernier (D). Plus précisément, ces moyens d'interrogation MI sont agencés de manière à adjoindre à un champ choisi de la requête des informations temporelles représentatives d'une date de substitution, puis à ordonner au terminal T de transmettre cette requête à l'application AS.

Comme illustré non limitativement, les moyens d'interrogation MI peuvent faire partie du terminal T, et plus préférentiellement d'une application client AC que comprend ce dernier (T) et qu'il utilise pour échanger des données avec l'application AS. Mais, d'autres modes d'implantation peuvent être envisagés. Ainsi, les moyens d'interrogation MI pourraient être implantés dans le terminal T tout en étant externes à l'application client AC (bien que couplés à cette dernière (AC)), ou bien ils pourraient constituer un équipement ou élément que l'on vient coupler au terminal T.

On notera qu'un terminal T d'administrateur système peut également fonctionner comme un terminal UE d'un usager final.

L'étape (b) consiste tout d'abord à extraire d'une requête, reçue par l'application AS et provenant d'un terminal T, non seulement la date donnée qu'elle contient (et qui désigne certaines informations), mais également les informations temporelles qu'elle contient et qui sont représentatives de la date de substitution qui va devoir être utilisée momentanément en remplacement de la date de référence (fournie par l'horloge de référence HR).

L'étape (b) se poursuit alors par l'accession de l'application AS à une base de données BD que comprend le serveur SC et dans laquelle sont stockés les informations qui décrivent les contenus, ainsi qu'éventuellement les contenus. Cette accession est destinée à extraire de la base de données BD les informations (ici de contenu(s)) désignées dans la requête et qui seront, ou ont été, accessibles à la date donnée extraite de la requête et définie par rapport à la date de substitution également extraite de la requête. De préférence, la date de substitution est identique à la date donnée d'accessibilité. Les informations (ici de contenu(s)) extraites (et requises) sont alors intégrées par l'application AS dans un message de réponse qui est ensuite transmis au terminal T requérant.

On comprendra que cette date de substitution est destinée à faire croire à l'application AS que pour la seule requête reçue du terminal T la date de référence en cours est la date de substitution. Par conséquent, cela n'a pas d'influence sur le traitement des requêtes issues dans le même temps des terminaux UE des usagers finaux puisque ces requêtes sont traitées avec la véritable date de référence fournie par l'horloge de référence HR.

Cette étape (b) peut être initiée par le dispositif de test de fonctionnement D, et plus précisément par des moyens d'extraction ME que comprend ce dernier (D). Plus précisément, ces moyens d'extraction ME sont agencés de manière à extraire d'une requête reçue par l'application AS les informations temporelles qui sont contenues dans son champ choisi, puis à contraindre cette application AS à utiliser momentanément la date de substitution, que représentent ces informations temporelles, en remplacement de la date de référence.

Comme illustré non limitativement, les moyens d'extraction ME peuvent faire partie du serveur SC, et plus préférentiellement de l'application AS que comprend (ici) ce dernier (SC). Mais, d'autres modes d'implantation peuvent être envisagés. Ainsi, les moyens d'extraction ME pourraient être implantés dans le serveur SC tout en étant externes à l'application AS (bien que couplés à cette dernière (AS)), ou bien ils pourraient constituer un équipement ou élément que l'on vient coupler au serveur SC.

On notera également qu'en l'absence d'informations temporelles dans une requête (ou bien en l'absence du champ choisi), les moyens d'extraction ME sont agencés pour fonctionner dans un mode par défaut. Ce dernier consiste tout simplement à récupérer auprès de l'horloge de référence HR sa date de référence en cours, afin de la fournir à l'application AS pour qu'elle l'utilise en tant que date de substitution, ce qui revient à fonctionner classiquement (c'est-à-dire comme c'est actuellement le cas dans l'art antérieur).

Le dispositif de test de fonctionnement D selon l'invention, et notamment ses moyens d'interrogation MI et ses moyens d'extraction ME, peuvent être réalisés sous la forme de modules logiciels (ou informatiques), ou bien de circuits électroniques, ou encore d'une combinaison de circuits électroniques et de modules logiciels.

L'invention offre plusieurs avantages, parmi lesquels:
- la possibilité de prendre en compte n'importe quelle date donnée d'accessibilité, et notamment des dates futures afin de vérifier qu'une programmation sera présentée comme souhaité,
- la possibilité de satisfaire à plusieurs requêtes parallèles en utilisant éventuellement plusieurs dates de substitution, identiques ou différentes, et la date de référence,
- la possibilité de satisfaire en parallèle une requête de test et une requête d'usager final.

L'invention ne se limite pas aux modes de réalisation de procédé de test de fonctionnement, de dispositif de test de fonctionnement, de terminal de communication et de serveur de contenus décrits ci-avant, seulement à titre d'exemple, mais elle englobe toutes les variantes que pourra envisager l'homme de l'art dans le cadre des revendications ci-après.

## Revendications

1. Procédé de test de fonctionnement d'une application (AS) de fourniture d'informations accessibles à des dates définies par rapport à une horloge de référence (HR) offrant une date de référence, ledit procédé comportant une étape a) dans laquelle un terminal de communication (T) transmet à ladite application (AS) une requête pour obtenir des informations accessibles à une date donnée, et une étape b) dans laquelle ladite application (AS) transmet audit terminal de communication (T) un message de réponse contenant les informations requises accessibles à ladite date donnée définie par rapport à ladite horloge de référence (HR), **caractérisé en ce qu'**à l'étape a) ledit terminal de communication (T) adjoint à un champ choisi de ladite requête des informations temporelles représentatives d'une date de substitution devant être utilisée momentanément par ladite application en remplacement de ladite date de référence seulement pour ladite requête, et à l'étape b) ladite application (AS) intègre dans ledit message de réponse les informations requises accessibles à ladite date donnée définie par rapport à ladite date de substitution contenue dans ladite requête.

2. Procédé selon la revendication 1, **caractérisé en ce qu'**à l'étape a) ledit terminal de communication (T) adjoint lesdites informations temporelles dans un champ additionnel dédié de ladite requête.

3. Procédé selon l'une des revendications 1 et 2, **caractérisé en ce que** les requêtes et les messages de réponse sont de type HTTP.

4. Procédé selon l'une des revendications 1 à 3, **caractérisé en ce que** ladite application (AS) est dédiée à la fourniture d'informations décrivant des contenus et stockées dans un serveur de contenus (SC), disposant de ladite horloge de référence (HR) offrant ladite date de référence, et accessibles pendant et avant des dates de diffusion desdits contenus.

5. Dispositif (D) de test de fonctionnement d'une application (AS) de fourniture d'informations accessibles à des dates définies par rapport à une horloge de référence (HR) offrant une date de référence, ledit dispositif (D) comportant des moyens d'interrogation (MI) propres à ordonner à un terminal de communication (T) de transmettre à ladite application (AS) une requête pour obtenir des informations accessibles à une date donnée, **caractérisé en ce que** lesdits moyens d'interrogation (MI) sont agencés pour adjoindre à un champ choisi de ladite requête des informations temporelles représentatives d'une date de substitution, et **en ce qu'**il comprend en outre des moyens d'extraction (ME) agencés pour extraire d'une requête reçue par ladite application (AS) les informations temporelles contenues dans son champ choisi, puis pour contraindre ladite application (AS) à utiliser momentanément la date de substitution qu'elles représentent en remplacement de ladite date de référence, seulement pour ladite requête, afin que ladite application (AS) intègre dans ledit message de réponse les informations requises accessibles à ladite date donnée définie par rapport à cette date de substitution.

6. Dispositif selon la revendication 5, **caractérisé en ce que** lesdits moyens d'interrogation (MI) sont agencés pour adjoindre lesdites informations temporelles dans un champ additionnel dédié de ladite requête.

7. Dispositif selon l'une des revendications 5 et 6, **caractérisé en ce que** les requêtes et les messages de réponse sont de type HTTP.

8. Dispositif selon l'une des revendications 5 à 7, **caractérisé en ce qu'**il est agencé pour fonctionner avec une application (AS) dédiée à la fourniture d'informations décrivant des contenus et stockées dans un serveur de contenus (SC), disposant de ladite horloge de référence (HR) offrant ladite date de référence, et accessibles pendant et avant des dates de diffusion desdits contenus.

9. Terminal de communication (T), **caractérisé en ce qu'**il comprend des moyens d'interrogation (MI) d'un dispositif de test de fonctionnement (D) selon l'une des revendications 5 à 8.

10. Serveur de contenus (SC), propre à stocker au moins des informations décrivant des contenus, et disposant d'une horloge de référence (HR) offrant une date de référence, **caractérisé en ce qu'**il comprend des moyens d'extraction (ME) d'un dispositif de test de fonctionnement (D) selon l'une des revendications 5 à 8.
